# EUROPÄISCHE PATENTSCHRIFT

(11) **EP 3 711 926 B1**
(45) Veröffentlichungstag und Bekanntmachung des Hinweises auf die Patenterteilung: **01.09.2021**
(21) Anmeldenummer: 19164639.7
(22) Anmeldetag: 22.03.2019
(51) Int. Cl.: B29C 49/78, B29C 49/42

(54) **BLASVENTILVORRICHTUNG EINER BLASVORRICHTUNG**
BLOW VALVE DEVICE OF A BLOWING DEVICE
DISPOSITIF DE SOUPAPE DE SOUFFLAGE POUR UN DISPOSITIF DE SOUFFLAGE

(43) Veröffentlichungstag der Anmeldung: 23.09.2020
(73) Patentinhaber: Eugen Seitz AG, 8623 Wetzikon (CH)
(72) Erfinder: SCHMIDT, Joachim, 8442 Hettlingen (CH); FEHLMANN, Mathias, 8330 Pfäffikon ZH (CH)
(74) Vertreter: Clerc, Natalia

(56) Entgegenhaltungen:
- DE-A1-102017 109 112
- US-A1- 2008 069 914
- US-A1- 2015 097 306
- US-A1- 2016 114 519
- US-A1- 2016 158 994

## Beschreibung

### TECHNISCHES GEBIET

Die vorliegende Erfindung betrifft ein Verfahren, eine Blasventilanordnung und ein Computerprogrammprodukt zur Überwachung einer Blasvorrichtung zur Herstellung eines Hohlkörpers.

### STAND DER TECHNIK

Hohlkörper aus thermoplastischen Kunststoffen, insbesondere PP oder PET Flaschen (PP = Polypropylen; PET = Polyethylenterephthalat) werden üblicherweise mittels Blasmaschinen hergestellt. Hierfür wird ein Rohling oder Vorformling der Blasmaschine zugeführt. Der Rohling weist im Wesentlichen bereits den fertigen Flaschenkopf auf, mittels dessen der Rohling in einer Blasform der Blasmaschine gehalten wird. Durch Einblasen eines Prozessgases, üblicherweise Luft, durch den Flaschenkopf wird der gewärmte Rohling aufgeblasen, bis er seine endgültige Form erreicht hat. Diese Form wird durch ein umschliessendes Formwerkzeug definiert.

Das Einblasen erfolgt vorzugsweise in zwei oder mehr Stufen. Beim Vorblasen mit einem ersten Druck von üblicherweise 2 bis 20 bar wird der Rohling zuerst länger bis er sich auch radial ausdehnt, beim nachfolgenden Hauptblasen mit einem höheren zweiten Druck von üblicherweise 15 bis 40 bar wird der Hohlkörper in seine gewünschte endgültige Form gebracht. Je nach Verfahren wird nur geblasen oder der Rohling wird zudem während des Vorblasens mittels eines verschiebbaren Dorns, auch Reckstange genannt, gestreckt. Dieses zweite Verfahren wird Streckblasen genannt.

Die heutigen Blasmaschinen und Streckblasmaschinen weisen üblicherweise eine Vorrichtung zur teilweisen Rückgewinnung des Prozessgases auf, d.h. es findet eine Rekuperation statt. Das restliche Prozessgas wird anschliessend nach aussen geführt, der Hohlkörper somit entlüftet.

Das Vorblasen, das Hauptblasen und falls vorhanden die Rekuperation sowie die Entlüftung werden über jeweilige Ventile gesteuert, hier Prozessventile genannt.

Die Herstellung derartiger Hohlkörper mittels Blasmaschinen erfolgt innerhalb weniger Sekunden, üblicherweise innerhalb von 1 - 3 s. Die Prozessventile müssen deshalb entsprechend kurze Ansprechzeiten aufweisen.

Bewährt haben sich vorgesteuerte Blasventilanordnungen, hier auch Prozessventile genannt, die ein pneumatisch betätigtes Hauptventil und mindestens ein zugehöriges Pilotventil aufweisen. Je nach Ausführungsform ist zusätzlich mindestens eine Boosterstufe vorhanden. Im Hauptventil wird die Druckluft verwendet, welche auch als Arbeitsmedium zum Formen des Hohlkörpers verwendet wird, wobei das Hauptventil mittels des mindestens einen Pilotventils pneumatisch vorgesteuert ist. Das Steuergas, üblicherweise ebenfalls Luft, wird mittels des mindestens einen Pilotventils einem Steuerraum des Hauptventils zugeführt. Je nach Ausführungsform ist ein Pilotventil pro Hauptventil vorhanden oder es sind zwei Pilotventile pro Hauptventil vorhanden. Als Pilotventile werden üblicherweise Solenoidventile verwendet, also Magnetventile mit einer Spindel, auch Stössel genannt.

Ein derartiges Prozessventil mit einem Pilotventil und einem pneumatischen Hauptventil ist in WO 2015/010216 beschrieben. Üblicherweise sind die einzelnen Prozessventile in einem gemeinsamen Ventilblock zusammengefasst, wie dies beispielsweise in EP 2 837 486 B1 beschrieben ist.

In anderen Ausführungsformen wird anstelle des oben beschriebenen pneumatisch vorgesteuerten Ventils ein direkt gesteuertes Prozessventil verwendet. Der Elektromagnet bringt die zur Bewegung des Prozessventils notwendige Kraftdirekt auf.

Um eine gleichbleibende Qualität der endgültigen Hohlkörper zu gewährleisten, ist es notwendig, dass keinerlei Abweichungen im Prozessverlauf vorkommen. Bereits die kleinsten Abweichungen im Druck des Prozessgases oder in den Blaszeiten können zu einer unerwünscht grossen Ausschussmenge an nicht zufrieden stellenden Endprodukten führen.

Die Prozessventile sind jedoch hohen Belastungen ausgesetzt und müssen eine hohe Anzahl von Schaltzyklen innert kürzester Zeit gewährleisten. Dabei müssen sie äusserst präzise arbeiten und möglichst kurze Ansprechzeiten aufweisen. Die Ventile unterliegen jedoch einem Alterungsprozess. Deshalb werden sie vorsorglich nach einer vorgegebenen maximalen Einsatzdauer und/oder einer vorgegebenen maximalen Anzahl Schaltzyklen ersetzt. Dabei muss die Blasmaschine stillgelegt werden. Der Produktionsausfall und vor Allem der Austausch der Ventile an sich erhöhen die Produktionskosten.

Der Alterungsprozess der einzelnen Prozessventile, insbesondere des Vorblasventils, des Hauptblasventils, des Rekuperationsventils und des Entlüftungsventils, findet in diversen Bereichen statt. Beispielsweise unterliegen die Hochdruckdichtungen und der Kunststoff des Kolbens einem Verschleiss. Zudem neigt der Stössel des Solenoidventils dazu, spontan auszufallen. Fällt dieser Stössel aus, so lässt sich das Hauptventil nicht mehr betätigen. Die vorwiegende Ausfallursache bei den Pilotventilen ist eine Reibungserhöhung beim Stössel, wodurch dieser sich verzögert bewegt und damit das Hauptventil verzögert aktiviert. Diese Reibungserhöhung wird meist durch Abrieb oder Verschmutzung erzeugt.

US 2016/0332357 A1 offenbart ein Verfahren, um einen Alterungsprozess oder eine andere Fehlfunktion der Ventile festzustellen. Dieses Verfahren basiert auf Druckmessung im Innern des Hohlkörpers. Der Zeitpunkt des Befehls zum Öffnen des Ventils wird festgehalten und mittels einer Druckmessung oder mittels eines anderen Detektionsmittels wird der Zeitpunkt des Druckanstiegs im Innern des Rohlings detektiert. Daraus wird eine Zeitverzögerung beim Öffnen des Ventils berechnet und dieser Wert wird mit einem vom Hersteller des Ventils gelieferten Wert verglichen. In US 2016/0332357 A1 wird von Solenoidventilen gesprochen und es wird darauf hingewiesen, dass diese in WO 2006/008380 offenbart seien. Das englischsprachige Pendant dazu ist die US 2008/0069914 A1. Dort sind pneumatische Kolbenventile dargestellt, welche mittels nicht näher beschriebenen Steuereinheiten gesteuert werden. Diese Kolbenventile werden in der genannten Publikation fälschlicherweise Solenoidventile genannt.

### DARSTELLUNG DER ERFINDUNG

Es ist deshalb eine Aufgabe der Erfindung, Fehlfunktionen und Alterungsprozesse von Prozessventilen in Blasmaschinen möglichst frühzeitig zu erkennen.

Diese Aufgabe lösen ein Verfahren, eine Blasventilanordnung und ein Computerprogrammprodukt mit den Merkmalen der Ansprüche 1, 13, 15 und 16.

Im erfindungsgemässen Verfahren zur Überwachung einer Blasvorrichtung zur Herstellung eines Hohlkörpers weist die Blasvorrichtung mindestens eine Prozessventileinheit zum Zuführen eines Prozessfluids in einen Vorformling des Hohlkörpers unter Prozessdruck auf und die Prozessventileinheit weist mindestens ein elektrisch betriebenes, insbesondere ein elektromagnetisch betriebenes Ventil auf. Erfindungsgemäss wird während eines Blasprozesses mindestens ein Wert eines elektrischen Stroms des elektrisch betriebenen Ventils detektiert. Vorzugsweise wird während des Blasprozesses ein Verlauf des elektrischen Stroms detektiert.

Die Überwachung des Stroms des elektrisch betriebenen Ventils bietet nicht nur die Erkennung eines aktuellen Fehlverhaltens sondern ermöglicht zudem eine Früherkennung und eine Beobachtung eines Alterungsprozesses des Ventils. Insbesondere das Verhalten des Stössels lässt sich beobachten und ein möglicher Ausfall dieses wichtigen Bauteils wird frühzeitig erfasst. Insbesondere elektromagnetisch betätigte Pilotventile, welche zur Vorsteuerung von pneumatischen Hauptventilen verwendet werden, lassen sich so zuverlässig überwachen. Auch andere Arten von Ventilanordnungen mit Solenoidventilen lassen sich so überwachen.

Dank des erfindungsgemässen Verfahrens lässt sich rechtzeitig erkennen, wann ein Ventil ausgewechselt werden muss, beispielsweise basierend auf Erfahrungswerten im Verhalten früher verwendeter Ventile des gleichen Typus. Ventile müssen nicht mehr nach vordefinierten theoretischen Zeitspannen oder bei Erreichen einer theoretisch festgelegten Anzahl Schaltzyklen ausgewechselt werden. Sie können dann ausgewechselt werden, wenn tatsächlich die Gefahr besteht, dass sie in nächster Zeit ihre Funktion nicht mehr zufriedenstellend erfüllen können. Grundsätzlich lässt sich so die Einsatzdauer derartiger Ventile verlängern und dadurch Kosten sparen. Zudem ist jedoch auch gewährleistet, dass Ventile, welche bereits vor der statistisch bzw. theoretisch festgelegten maximalen Lebensdauer ausfallen werden, frühzeitig identifiziert werden können und deshalb ebenfalls rechtzeitig ausgewechselt werden können. Auf diese Weise lassen sich unerwartete Zwischenfälle an der Blasmaschine und ungeplante Produktionsunterbrüche vermeiden.

Vorzugsweise wird der Strom des Ventils in aufeinander folgenden Zeitabständen gemessen. Diese Zeitabstände sind vorzugsweise sehr kurz, vorzugsweise hochfrequent. Sie betragen beispielsweise 0.1 ms bis 1 ms. Vorzugsweise wird der Strom 1'000 bis 10'000 mal pro Sekunde gemessen. Dadurch lässt sich eine relativ genaue Stromkurve abbilden.

In einer Variante des Verfahrens wird eine Änderung des Stroms gemessen und nicht der Absolutwert des Stroms. In einer bevorzugten Variante des Verfahrens wird der effektive Stromwert gemessen. Vorzugsweise wird dadurch eine Verlaufskurve erhalten mit An- und Abstiegen. Vorzugsweise wird in einer Auswertung die Ableitung verwendet, beispielsweise um den lokalen Wendepunkt zu erkennen, der das Ende der Gegeninduktion und damit das Ende der Stösselbewegung darstellt.

Vorzugsweise wird der Zeitpunkt der Messung des Stroms gemeinsam mit einem zu diesem Zeitpunkt gemessenen Stromwert festgehalten. Diese Werte lassen sich beispielsweise in eine elektronische Tabelle eintragen, welche zur späteren Auswertung und/oder zur Speicherung der Werte verwendet wird.

In einer bevorzugten Form des Verfahrens werden markante Punkte eines Verlaufs des elektrischen Stroms detektiert. Diese markanten Punkte dienen dazu, das Verhalten des Ventils möglichst genau nachvollziehen zu können.

In einer Variante des Verfahrens wird der Strom zu vorgegebenen Zeitpunkten gemessen. Sollen markante Punkte des Stromverlaufs gefunden werden, lassen sich die genäherten Zeitpunkte dieser markanten Punkte beispielsweise mittels Interpolation der gemessenen Stromwerte ermitteln.

Das erfindungsgemässe Verfahren eignet sich insbesondere zur Anwendung mit einer Prozessventileinheit, die ein Hauptventil und mindestens ein Pilotventil aufweist, wobei das mindestens eine Pilotventil das Hauptventil steuert und wobei der Verlauf des elektrischen Stroms mindestens eines des mindestens einen Pilotventils detektiert wird. Vorzugsweise werden alle Pilotventile mittels dieser Strommessung überwacht.

Vorzugsweise ist das Hauptventil ein pneumatisches Ventil, welches mittels des Prozessfluids betrieben ist und welches mittels eines von einem Pilotventil gesteuerten Steuerdrucks gesteuert ist. Das Pilotventil ist elektrisch betrieben. Vorzugsweise ist es ein elektromagnetisches Ventil bzw. ein Solenoidventil.

In einer anderen Ausführungsform ist das Hauptventil direkt gesteuert und der Strom der Steuerung des Hauptventils wird detektiert.

Vorzugsweise wird zusätzlich oder alternativ zur Strommessung während des Blasprozesses ein Druck im Bereich des Innern des Vorformlings, vorzugsweise in einer Verbindungsleitung vom Ventil zum Vorformling, gemessen und der Zeitpunkt der Druckmessung wird ebenfalls festgehalten.

Alternativ oder zusätzlich zur Strommessung und zur Druckmessung im Innern des Vorformlings wird während des Blasprozesses ein Druck im Bereich eines Tanks des Prozessfluids gemessen und der Zeitpunkt der Druckmessung wird festgehalten.

Diese zwei Druckmessungen erlauben es, einen Druckverlauf festzuhalten. Diese Druckmessungen, insbesondere wenn sie mit Druckverläufen früherer Messungen oder mit theoretisch berechneten oder empirisch ermittelten theoretischen Druckverläufen verglichen werden, geben Auskunft über den Status und über Alterungsprozesse der Ventileinheiten und evtl. auch über andere Bereiche der Blasvorrichtung. Sie können zur Früherkennung von Servicearbeiten und des Bedarfs eines Ersetzens von Bauteilen, wie beispielsweise der Ventileinheiten, dienen. Alternativ oder zusätzlich lassen sie sich zur Steuerung der Prozessparameter, wie beispielsweise Schaltzyklen, Schaltzeiten und Höhe der angelegten Drücke, verwenden.

Vorzugsweise werden markante Punkte im Druckverlauf detektiert und mit markanten Punkten in vorbekannten und/oder theoretisch ermittelten Druckverläufen verglichen und die Daten entsprechend ausgewertet. Eine Auswertung kann eine Berechnung umfassen. Andere Arten von Auswertungen sind jedoch auch einsetzbar. Dies gilt in diesem Text generell für die Definition des Begriffs "Auswertung".

Vorzugsweise werden die gemessenen Druckwerte unter Berücksichtigung der gemessenen Werte des Stroms ausgewertet.

Die erfindungsgemässe Blasventilanordnung einer Blasvorrichtung zur Herstellung eines Hohlkörpers weist mindestens eine Prozessventileinheit zum Zuführen eines Prozessfluids in einen Vorformling des Hohlkörpers unter Prozessdruck auf, wobei die Prozessventileinheit mindestens ein elektrisch betriebenes Ventil aufweist. Erfindungsgemäss ist ein Mittel zur Detektion eines elektrischen Stromwerts des elektrisch betriebenen Ventils während eines Blasprozesses vorhanden. Alternativ oder zusätzlich ist vorzugsweise ein Drucksensor zur Messung des Drucks im Bereich des Innern des Vorformlings vorhanden.

Weitere Ausführungsformen und Variante des Verfahrens sind in den abhängigen Ansprüchen angegeben.

### KURZE BESCHREIBUNG DER ZEICHNUNGEN

Eine bevorzugte Ausführungsform der Erfindung wird im Folgenden anhand der Zeichnungen beschrieben, die lediglich zur Erläuterung dienen und nicht einschränkend auszulegen sind. In den Zeichnungen zeigen:
- Figur 1: ein exemplarisches Beispiel eines Prozessventils mit pneumatischem Hauptventil und einem Pilotventil im geschlossenen Zustand des Hauptventils in einer schematischen Darstellung;
- Figur 2: das Prozessventil gemäss Figur 1 im geöffneten Zustand des Hauptventils;
- Figur 3: eine Einheit, wie in einer Blasmaschine verwendet, mit Ventilblock und Aktorbox
- Figur 4: einen Längsschnitt durch ein Pilotventil und
- Figuren 5a bis 5c: einen Ausschnitt einer graphischen Darstellung von gemessenen Werten während eines Blasprozesses.

### BESCHREIBUNG BEVORZUGTER AUSFÜHRUNGSFORMEN

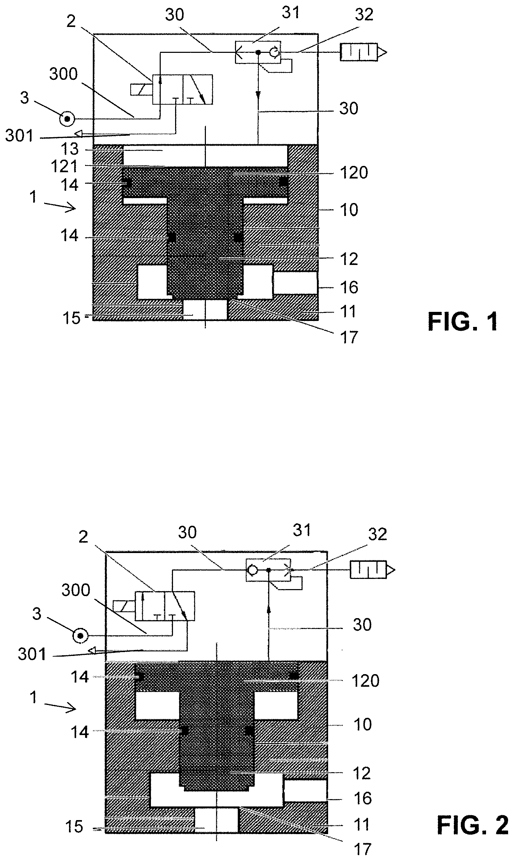

In den Figuren 1 und 2 ist ein typisches Prozessventil dargestellt. Die Erfindung ist jedoch nicht auf diese Art Ventil beschränkt, sondern sie kann auch bei anderen Ventilen angewandt werden, welche ein elektronisch angesteuertes Hilfs- oder Hauptventil verwenden. Insbesondere ist die Erfindung für vorgesteuerte Prozessventile einsetzbar, welche ein pneumatisches Hauptventil und mindestens ein Pilotventil, insbesondere mindestens ein Solenoidventil, aufweisen. In anderen Ausführungsformen ist das Hauptventil direkt gesteuert.

Das hier schematisch dargestellte Prozessventil weist ein pneumatisches Hauptventil 1 und ein Pilotventil 2 in Form eines elektromagnetischen Ventils, also eines Solenoidventils, auf.

Das Hauptventil 1 weist ein Ventilgehäuse 10 mit einem Steuerraum 13, einem Prozessdruck-Eingangskanal 15 und einen Prozessdruck-Ausgangskanal 16 auf. Ein Schaltkolben 12 ist verschiebbar im Ventilgehäuse 10 gehalten, wobei er mittels Hochdruck-Dichtungen 14 gegenüber dem Ventilgehäuse 10 gedichtet ist. Üblicherweise ist er rotationssymmetrisch ausgebildet. Der Schaltkolben 12 liegt im geschlossenen Zustand des Hauptventils 1, wie dies in Figur 1 gezeigt ist, auf einem Ventilsitz 17 auf und verschliesst dadurch eine Verbindung zwischen dem Prozessdruck-Eingangskanal 15 und dem Prozessdruck-Ausgangskanal 16. Im geöffneten Zustand gemäss Figur 2 ist diese Verbindung offen. Im geöffneten Zustand des Hauptventils 1 kann somit das Prozessgas von der hier nicht dargestellten Prozessgasquelle in den hier ebenfalls nicht dargestellten Vorformling oder Rohling gelangen und diesen zur gewünschten Endform des Hohlkörpers, insbesondere der PP oder PET Flasche, aufblasen.

Der Steuerraum 13 des Hauptventils 1 ist über eine Steuerluftleitung 30 mit einer Steuerluftquelle 3 verbunden. Die unter Druck stehende Steuerluft wirkt im Steuerraum 13 auf eine Steuerfläche 121 eines Kolbenkopfes 120 des Schaltkolbens 12. Der dadurch entstehende Steuerdruck erzeugt eine Kraft auf den Schaltkolben12, die grösser ist als die über den Prozessdruck-Eingangskanal 15 auf die gegenüberliegende Seite des Schaltkolbens 12 wirkende Kraft des Prozessgasdruckes. Dadurch wird der Schaltkolben 12 in seiner geschlossenen Stellung gehalten.

Wird der Steuerdruck abgesenkt, so drückt das Prozessgas den Schaltkolben 12 nach oben und das Hauptventil 1 wird geöffnet.

Das Umschalten des Steuerdrucks erfolgt mittels des genannten Pilotventils 2. Dieses ist, wie hier dargestellt, über die Steuerluftleitung 30 mit dem Steuerraum 13 verbunden. Es ist ferner über einen Steuerlufteingangskanal 300 mit der Steuerluftquelle 3 und über einen Steuerluftausgangskanal 301 mit der Umgebung oder einer Steuerluftrückgewinnungseinheit verbunden. Zur schnellen Entlüftung des Steuerraums kann, wie hier dargestellt, ein Steuerluftschaltraum 31 vorhanden sein, welcher über einen zusätzlichen Entlüftungskanal 32 minimale Schaltzeiten gewährleistet. Ein derartiges Prozessventil ist beispielsweise in WO 2015/010216 A1 detailliert beschrieben. Es dient lediglich als Beispiel, um mögliche Funktionen des Hauptventils und des mindestens einen Pilotventils zu verstehen.

In anderen Ausführungsformen dient der mittels des Pilotventils 2 betätigte Steuerdruck zum Öffnen des Hauptventils 1. In weiteren Ausführungsformen dient ein erstes Pilotventil mit einem ersten Steuerdruck zum Öffnen und ein zweites Pilotventil mit einem zweiten Steuerdruck zum Schliessen des Hauptventils 1. In weiteren Ausführungsformen erfolgt die Ansteuerung mittels eines 5/2 Wege Pilotventils, bei dem wechselwirkend entweder oben be- und unten entlüftet wird oder umgekehrt.

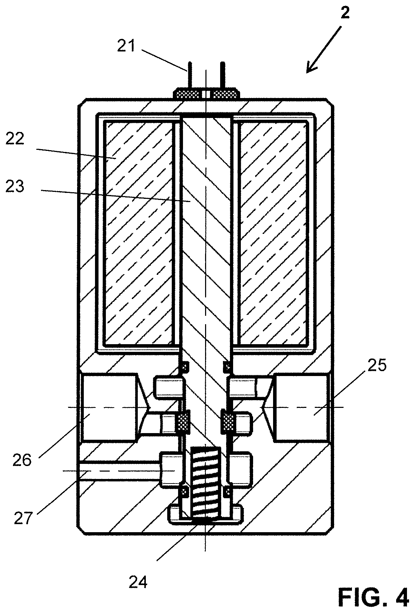

In Figur 4 ist ein Beispiel eines Pilotventils 2 dargestellt, wie es typischerweise in derartigen Prozessventilen eingesetzt ist. Dies ist lediglich ein Beispiel. Es lassen sich auch andere Arten von Pilotventilen einsetzen. Das hier dargestellte Pilotventil 2 weist ein Gehäuse auf, in welchem eine Elektromagnetspule 22 und einen die Spule 22 durchsetzenden Stössel 23 angeordnet ist. An einem Ende des Stössels 23 ist eine Feder 24 angeordnet. Der Stössel 23 ist entgegen der Kraft dieser Feder 24 mittels des Elektromagneten bewegbar. Durch die Bewegung des Stössels 24 wird eine Verbindung zur Druckversorgung freigegeben. Der Anschluss zur Druckversorgung ist mit dem Bezugszeichen 25 versehen. Im unbelasteten Zustand ist eine Verbindung zum Steuerraum des Hauptventils geschaffen. Der entsprechende Ausgang ist mit dem Bezugszeichen 26 versehen. Vorzugsweise ist zudem ein Ausgang 27 zu einem Schalldämpfer vorgesehen.

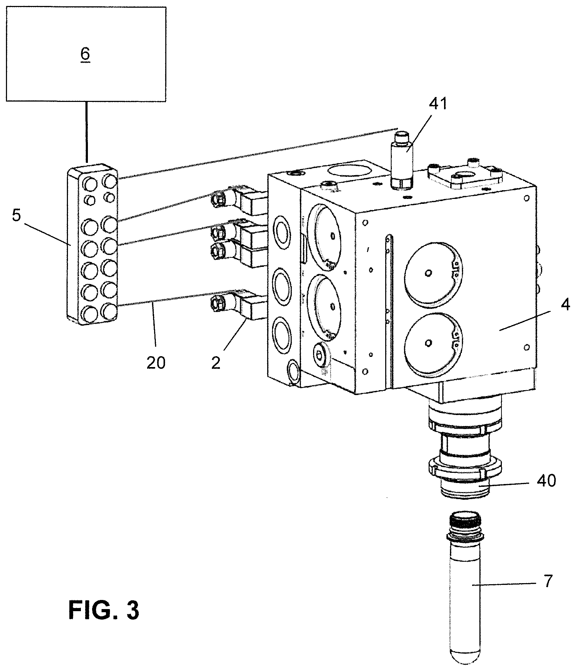

Für die Herstellung eines Hohlkörpers aus einem Rohling sind üblicherweise mehr als ein Prozessventil notwendig. Üblicherweise sind ein Vorblasventil und mindestens ein Hauptblasventil vorhanden. Vorzugsweise sind ferner mindestens ein Rekuperationsventil und/oder ein Entlüftungsventil vorhanden. Diese Ventile sind, wie in Figur 3 dargestellt, vorzugsweise in einem gemeinsamen Ventilblock 4 angeordnet, welcher mindestens einen, vorzugsweise mehrere Prozessdruck-Eingangs- und Ausgangskanäle zur Verbindung mit der Prozessgasquelle aufweist. Mittels des Prozessgases wird der Vorformling in die gewünschte Form des endgültigen Hohlkörpers aufgeblasen. Der Ventilblock 4 weist hierfür eine Blasdüse 40 auf, an welche der aufzublasende Rohling oder Vorformling 7 befestigt wird.

Der Ventilblock 4 weist ferner mindestens einen Drucksensor 41 auf, der den Druck des Prozessgases im Bereich der Düse 40 misst. Dies entspricht mit minimaler und somit vernachlässigbarer Verzögerung dem Druck, welcher im Innern des Rohlings 7 herrscht.

Die einzelnen Pilotventile 2 der einzelnen Prozessventile sind über jeweilige elektronische Steuerungsanschlüsse 20 mit einer Aktorbox 5 verbunden, die wiederum direkt oder über weitere Steuerungsuntereinheiten mit der Maschinensteuerung 6 verbunden ist oder die bereits selber Teil der Maschinensteuerung 6 ist. Die Aktorbox 5 und die Maschinensteuerung 6 werden im Folgenden als Steuereinheit bezeichnet.

Die Steuereinheit steuert die Pilotventile 2 und somit die Prozessventile. Sie erhält zudem die Messdaten des mindestens einen Drucksensors 41.

Erfindungsgemäss misst die Steuereinheit, vorzugsweise die Aktorbox 5, den Strom mindestens eines, vorzugsweise aller Pilotventile 2. Die Strommessung kann zu einem vorgegebenen Zeitpunkt erfolgen oder es kann der Zeitpunkt bestimmt werden, an welchem ein bestimmter Stromwert erreicht ist. Vorzugsweise wird der Zeitpunkt des Gegenpeaks des Stroms bei Ende der Gegeninduktion beim Ein- und oder Ausschalten des Pilotventils 2 festgestellt. In der bevorzugtesten Ausführungsform erfolgt die Strommessung in vorbestimmten Zeitabständen, beispielsweise alle 0.1 ms.

Die Messung erfolgt mit üblichen und bekannten Mitteln. Die Messung erfolgt beispielsweise, indem ein Messwiderstand in den Stromkreis zum Pilotventil eingebaut ist. Über diesem Widerstand erfolgt ein Spannungsabfall, dessen Grösse anschliessend verstärkt wird. Die Grösse dieses Spannungsabfalls ist proportional zum fliessenden Strom.

Die gemessenen Stromwerte und/oder die gemessenen Zeitpunkte des Auftretens von markanten Stromwerten, beispielsweise der Umkehrpunkt bei der Gegeninduktion, werden mit früheren Messwerten und/oder mit vordefinierten Werten verglichen. Basierend auf einer Abweichung dieser miteinander verglichenen Werte werden Rückschlüsse über den Alterungsprozess und/oder dem Zustand des Pilotventils 2 gezogen. So lassen sich auch Ventileigenschaften feststellen und beobachten, wie beispielsweise Verzögerungen, Genauigkeit und Verschleiss. Ist die Abweichung derart, dass basierend auf Erfahrungswerten ein baldiger Ausfall des Pilotventils 2 wahrscheinlich ist, so wird von der Steuereinheit eine Fehlermeldung generiert und es wird zum Wechseln des entsprechenden Pilotventils 2 aufgefordert. In einer Ausführungsform wird vor der Aufforderung zum Wechsel des Pilotventils über die Steuerung eine Kompensation der Abweichung eingeleitet. Das Signal für die Ventilschaltung wird in diesem Fall vorzugsweise entsprechend der Grösse einer detektierten Verzögerung beim Stromverlauf des Pilotventils früher angefordert. Auf diese Weise lässt sich die Einsatzdauer des Pilotventils verlängernt. In anderen Ausführungsformen wird der Zustand des Pilotventils 2 optisch von der Steuereinheit angezeigt, so dass der Benützer den steten Alterungsprozess des Pilotventils 2 frühzeitig beobachten kann.

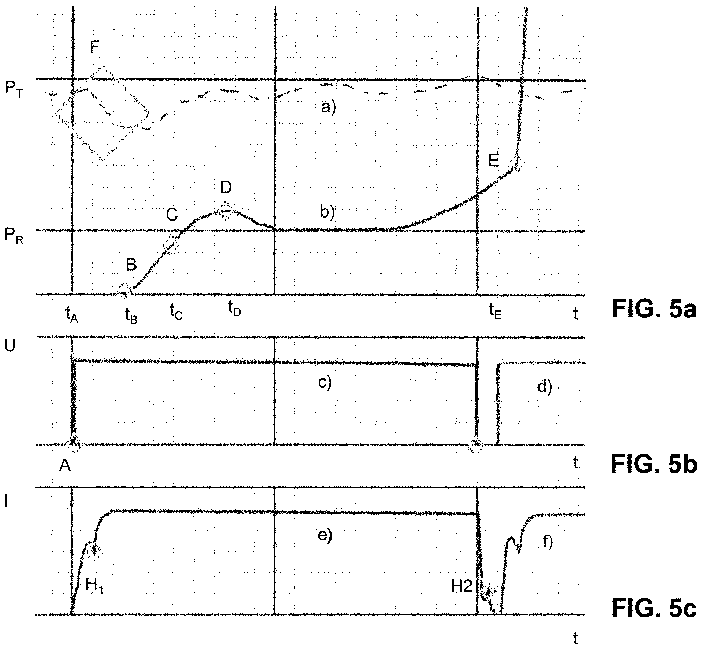

In den Figuren 5a bis 5c ist ein Ausschnitt eines typischen Prozessverlaufes zum Zeitpunkt des Prozessbeginns mit dem Vorblasen dargestellt. Figur 5a zeigt dabei in Kurve a) den Druckverlauf P_{T} in der Prozessdruckquelle, d.h. den Tankdruck als Funktion der Zeit t. Die Kurve b) zeigt den Druck P_{R}, welcher vom Drucksensor 41 im Ventilblock 4 im Bereich des Innenraums des Rohlings als Funktion der Zeit gemessen wurde. In Figur 5b ist das bei diesem Prozess gemessene oder angelegte Spannungssignal U des Pilotventils 2 als Funktion derselben Zeit t wie in der Figur 5a dargestellt. Dabei zeigt die Kurve c) das Spannungssignal U des Pilotventils 2 für das Vorblasventil und die Kurve d) das Spannungssignal U des Pilotventils 2 für das Hauptblasventil. In Figur 5c ist der dazu passende gemessene Stromwert I als Funktion derselben Zeit t der genannten Pilotventile wiedergegeben. Die Kurve e) zeigt den Stromwert I des Pilotventils des Vorblasventils und die Kurve f) den Stromwert I des Pilotventils des Hauptblasventils.

Wie in den Kurven e) und f) gut erkennbar ist, weist der Stromverlauf I beim Einschalten des Pilotventils einen nach unten gerichteten Peak und beim Ausschalten einen nach oben gerichteten Peak auf. Dieser bezeichnet den Zeitpunkt des Endes der Gegeninduktion H₁, H₂. Erfindungsgemäss werden diese Zeitpunkte t_{H1} und t_{H2} und/oder die Grösse des Peaks detektiert und von der Steuerungseinheit mit einem vorgegebenen Wert verglichen. Vorzugsweise werden diese Daten in der Steuerungseinheit oder in einer Cloud zur späteren Wiederverwendung gespeichert.

Die Zusammenschau der Figuren 5a bis 5c zeigt zudem das Druckverhalten P_{R} im Bereich des Innenraums des Rohlings im Laufe des Prozesses auf. Zum Zeitpunkt A wird die Spannung U an das Pilotventil des Vorblasventils angelegt. Aufgrund der ersten Gegeninduktion H₁ reagiert das Pilotventil jedoch zeitverzögert. Der Innendruck P_{R} im Rohling steigt zeitverzögert an. Zum Zeitpunkt Zeitpunkt t_{B} in der Kurve b) der Figur 5a hebt sich erstmals der Druckanstieg genügend deutlich vom Messrauschen ab. Der Druck in Punkt C zum Zeitpunkt tc in der Kurve b) gemäss Figur 5a beträgt circa 50% des ersten Druckanstiegs (d.h. des Druckanstiegs bis zur ersten Senkung des Drucks). Die Differenz zwischen dem Zeitpunkt tc und t_{B} gibt einen Hinweis darauf, dass sich das Hauptventil zeitgerecht vollständig geöffnet hat.

Der Druck P_{T} im Tank ist bereits früher gesunken, wie der Bereich F in der Kurve a) zeigt. In Punkt D zum Zeitpunkt t_{D} der Kurve b) beginnt sich der Rohling auch radial auszudehnen. Dies hat erfahrungsgemäss zur Folge, dass der Druck P_{R} im Innern des Rohlings kurzfristig sinkt, wie dies in Kurve b) gut erkennbar ist. Es folgt eine Zeitdauer mit annähernd gleichbleibendem Druck P_{R} im Innern des Rohlings mit einem nachfolgenden Anstieg. Auch dies ist in Kurve b) gut erkennbar.

Die Abschaltung des Pilotventils des Vorblasventils erfolgt ebenfalls zeitverzögert mit der zweiten Gegeninduktion H₂. Das kurz darauf erfolgte Einschalten des Hauptblasventils (Kurve d) in Figur 5b) und Kurve f) in Figur 5c) verläuft wiederum zeitverzögert. Punkt E in der Kurve b) zeigt den Druckanstieg nach dem Einschalten des Hauptblasventils. Wie in Kurve b) erkennbar ist, folgt der massive Anstieg des Innendrucks P_{R} im teilweise aufgeblasenen Rohling zeitverzögert.

In einer Variante des erfindungsgemässen Verfahren werden nicht nur die Zeitpunkte und/oder die Höhe mindestens einer der Gegeninduktionen H₁ und H₂ festgestellt, sondern es werden auch die Drücke überwacht. Es kann der Druck P_{T} im Prozesstank und/oder der Druck P_{R} im Ausgangskanal des Ventilblocks und somit im Innern des Rohlings gemessen werden. Vorzugsweise werden die Werte in sehr kurzen Zeitintervallen als Funktion der Zeit gemessen. Alternativ können diese Drücke P_{T} und/oder P_{R} auch zu vorgegebenen Zeitpunkten gemessen werden. Diese Werte werden mit zu früheren Zeitpunkten gemessenen Werten und/oder mit vorgegebenen Werten verglichen. Abweichungen werden detektiert. Bei Über- und/oder Unterschreitung von vorgegebenen Grenzwerten und/oder vorgegebenen maximalen Abweichungen wird dies angezeigt.

Je nach Ausführungsform dienen diese Werte zur Überwachung von Alterungsprozessen in der Maschine, insbesondere im Ventilblock und/oder im Prozessgastank. Alternativ oder zusätzlich lassen sie sich auch zur Steuerung der Blasmaschine verwenden, beispielsweise in dem der Prozessdruck erhöht oder erniedrigt wird, die Zeitpunkte der Betätigung der Prozessventile geändert werden und/oder die Schaltzyklen der Prozessventile verändert werden.

Vorzugsweise werden die Daten der Druckmessung P_{R} im Innenraum des Rohlings mit den Daten der Strommessung I der Pilotventile kombiniert und gemeinsam ausgewertet. Dies ergibt beispielsweise weitere Erkenntnisse zum Zustand des Prozessventils, insbesondere zum Alterungsprozess der übrigen Teile des Pilotventils und/oder des Hauptventils.

In einer anderen Ausführungsform wird die Druckmessung P_{R} im Innenraum des Rohlings und/oder die Messung des Tankdrucks P_{T} als Funktion der Zeit ohne die Messung des Stroms I der Pilotventile durchgeführt und daraus Informationen zum Status der Ventileigenschaften und/oder zum Alterungsprozess der Prozessventile gewonnen. Diese Ausführungsform wird hier als separate Erfindung ebenfalls beansprucht.

Das erfindungsgemässe Verfahren und die erfindungsgemässe Vorrichtung ermöglichen die Früherkennung eines Alterungsprozesses der Prozessventile, insbesondere deren Pilotventile und/oder das Erkennen des Status von Ventileigenschaften.

**BEZUGSZEICHENLISTE**

| | | | |
|---|---|---|---|
| 1 | Hauptventil | 3 | Steuerluftquelle |
| 10 | Ventilgehäuse | 30 | Steuerluftleitung |
| 12 | Schaltkolben | 300 | Steuerlufteingangskanal |
| 120 | Kolbenkopf | 301 | Steuerluftausgangskanal |
| 121 | Steuerfläche | 31 | Steuerluftschaltraum |
| 13 | Steuerraum | 32 | Entlüftungskanal |
| 14 | Dichtung | | |
| 15 | Prozessdruck-Eingangskanal | 4 | Ventilblock |
| 16 | Prozessdruck-Ausgangskanal | 40 | Blasdüse |
| 17 | Ventilsitz | 41 | Drucksensor |
| 2 | Pilotventil | 5 | Aktorbox |
| 20 | Steuerungsanschluss | | |
| 21 | Steckverbindung zur Stromquelle | 6 | Maschinensteuerung |
| 22 | Elektromagnetspule | 7 | Vorformling |
| 23 | Stössel | | |
| 24 | Feder | | |
| 25 | Anschluss zur Druckversorgung | | |
| 26 | Ausgang zum Steuerraum des Prozessventils | | |
| 27 | Ausgang zum Schalldämpfer | | |

## Patentansprüche

1. Verfahren zur Überwachung einer Blasvorrichtung zur Herstellung eines Hohlkörpers, wobei die Blasvorrichtung mindestens eine Prozessventileinheit zum Zuführen eines Prozessfluids in einen Vorformling des Hohlkörpers unter Prozessdruck aufweist und wobei die Prozessventileinheit mindestens ein elektrisch betriebenes Ventil aufweist, **dadurch gekennzeichnet, dass** während eines Blasprozesses mindestens ein Wert eines elektrischen Stroms des elektrisch betriebenen Ventils detektiert wird.

2. Verfahren nach Anspruch 1, wobei während des Blasprozesses ein Verlauf des elektrischen Stroms detektiert wird.

3. Verfahren nach einem der Ansprüche 1 oder 2, wobei der Strom des Ventils in aufeinander folgenden Zeitabständen gemessen wird, vorzugsweise in Zeitabständen von 0.1 ms bis 1 ms.

4. Verfahren nach einem der Ansprüche 1 bis 3, wobei eine Änderung des Stroms gemessen wird.

5. Verfahren nach einem der Ansprüche 1 bis 4, wobei der Zeitpunkt der Messung des Stroms gemeinsam mit einem zu diesem Zeitpunkt gemessenen Stromwert festgehalten wird.

6. Verfahren nach einem der Ansprüche 1 bis 5, wobei der Strom zu vorgegebenen Zeitpunkten gemessen wird.

7. Verfahren nach einem der Ansprüche 1 bis 6, wobei markante Punkte eines Verlaufs des elektrischen Stroms detektiert werden.

8. Verfahren nach einem der Ansprüche 1 bis 7, wobei die Prozessventileinheit ein Hauptventil und mindestens ein Pilotventil aufweist, wobei das mindestens eine Pilotventil das Hauptventil steuert und wobei der Verlauf des elektrischen Stroms mindestens eines des mindestens einen Pilotventils detektiert wird.

9. Verfahren nach Anspruch 8, wobei das Hauptventil ein pneumatisches Ventil ist, welches mittels des Prozessfluids betrieben ist und mittels eines vom mindestens einen Pilotventil gesteuerten Steuerdrucks gesteuert ist.

10. Verfahren nach einem der Ansprüche 1 bis 9, wobei während des Blasprozesses ein Druck im Bereich des Innern des Vorformlings gemessen wird und der Zeitpunkt der Druckmessung festgehalten wird.

11. Verfahren nach einem der Ansprüche 1 bis 10, wobei während des Blasprozesses ein Druck im Bereich eines Tanks des Prozessfluids gemessen wird und der Zeitpunkt der Druckmessung festgehalten wird.

12. Verfahren nach einem der Ansprüche 10 oder 11, wobei die gemessenen Druckwerte unter Berücksichtigung der gemessenen Werte des Stroms ausgewertet werden.

13. Blasventilanordnung einer Blasvorrichtung zur Herstellung eines Hohlkörpers, wobei die Blasventilanordnung mindestens eine Prozessventileinheit zum Zuführen eines Prozessfluids in einen Vorformling des Hohlkörpers unter Prozessdruck aufweist und wobei die Prozessventileinheit mindestens ein elektrisch betriebenes Ventil aufweist, **dadurch gekennzeichnet, dass** ein Mittel zur Detektion eines elektrischen Stromwerts des elektrisch betriebenen Ventils während eines Blasprozesses vorhanden ist.

14. Blasventilanordnung gemäss Anspruch 13, wobei die Blasventilanordnung mindestens einen Drucksensor zur Messung des Drucks im Bereich des Innern des Vorformlings aufweist.

15. Computerprogrammprodukt zur Steuerung einer Blasventilanordnung gemäss einem der Ansprüche 13 oder 14.

16. Computerprogrammprodukt zur Durchführung des Verfahrens gemäss einem der Ansprüche 1 bis 12.

## Claims

1. A method for monitoring a blow-moulding device for producing a hollow body, wherein the blow-moulding device has at least one process valve unit for feeding a process fluid into a preform of the hollow body under process pressure, and wherein the process valve unit has at least one electrically operated valve, **characterized in that** at least one value of an electric current of the electrically operated valve is detected during a blowing process.

2. The method as claimed in claim 1, wherein a characteristic of the electric current is detected during the blowing process.

3. The method as claimed in either of claims 1 or 2, wherein the current of the valve is measured in successive time intervals, preferably in time intervals of from 0.1 ms to 1 ms.

4. The method as claimed in any of claims 1 to 3, wherein a change in the current is measured.

5. The method as claimed in any of claims 1 to 4, wherein the time of measurement of the current is recorded together with a current value measured at this time.

6. The method as claimed in any of claims 1 to 5, wherein the current is measured at predetermined times.

7. The method as claimed in any of claims 1 to 6, wherein distinctive points of a characteristic of the electric current are detected.

8. The method as claimed in any of claims 1 to 7, wherein the process valve unit has a main valve and at least one pilot valve, wherein the at least one pilot valve controls the main valve, and wherein the characteristic of the electric current of at least one of the at least one pilot valve is detected.

9. The method as claimed in claim 8, wherein the main valve is a pneumatic valve which is operated by the process fluid and is controlled by a control pressure controlled by the at least one pilot valve.

10. The method as claimed in any of claims 1 to 9, wherein a pressure in the region of the interior of the preform is measured during the blowing process, and the time of the pressure measurement is recorded.

11. The method as claimed in any of claims 1 to 10, wherein a pressure in the region of a tank of the process fluid is measured during the blowing process, and the time of the pressure measurement is recorded.

12. The method as claimed in either of claims 10 or 11, wherein the measured pressure values are evaluated taking into account the measured values of the current.

13. A blowing valve assembly of a blow-moulding device for producing a hollow body, wherein the blowing valve assembly has at least one process valve unit for feeding a process fluid into a preform of the hollow body under process pressure, and wherein the process valve unit has at least one electrically operated valve, **characterized in that** a means for detecting an electric current value of the electrically operated valve during a blowing process is present.

14. The blowing valve assembly as claimed in claim 13, wherein the blowing valve assembly has at least one pressure sensor for measuring the pressure in the region of the interior of the preform.

15. A computer program product for controlling a blowing valve assembly as claimed in either of claims 13 or 14.

16. A computer program product for carrying out the method as claimed in any of claims 1 to 12.

## Revendications

1. Procédé de surveillance d'un dispositif de soufflage destiné à produire un corps creux, le dispositif de soufflage comportant au moins une unité de vannes de traitement destinée à amener un fluide de traitement dans une préforme du corps creux sous pression de traitement et l'unité de vannes de traitement comportant au moins une électrovanne, **caractérisé en ce qu'**au moins une valeur d'un courant électrique de l'électrovanne est détectée pendant un processus de soufflage.

2. Procédé selon la revendication 1, une variation du courant électrique étant détectée pendant le processus de soufflage.

3. Procédé selon l'une des revendications 1 et 2, le courant de la vanne étant mesuré à des intervalles de temps successifs, de préférence à des intervalles de temps de 0,1 ms à 1 ms.

4. Procédé selon l'une des revendications 1 à 3, une variation du courant étant mesurée.

5. Procédé selon l'une des revendications 1 à 4, l'instant de la mesure du courant étant consigné conjointement avec une valeur de courant mesurée à cet instant.

6. Procédé selon l'une des revendications 1 à 5, le courant étant mesuré à des instants prédéterminés.

7. Procédé selon l'une des revendications 1 à 6, des points marquants d'une variation du courant électrique étant détectés.

8. Procédé selon l'une des revendications 1 à 7, l'unité de vannes de traitement comportant une vanne principale et au moins une vanne pilote, l'au moins une vanne pilote commandant la vanne principale et la variation du courant électrique d'au moins une de l'au moins une vanne pilote étant détectée.

9. Procédé selon la revendication 8, la vanne principale étant une vanne pneumatique qui est actionnée au moyen du fluide de traitement et qui est commandée au moyen d'une pression de commande commandée par l'au moins une vanne pilote.

10. Procédé selon l'une des revendications 1 à 9, une pression au niveau de l'intérieur de la préforme étant mesurée pendant le processus de soufflage et l'instant de la mesure de pression étant consigné.

11. Procédé selon l'une des revendications 1 à 10, une pression au niveau d'un réservoir du fluide de traitement étant mesurée pendant le processus de soufflage et l'instant de la mesure de pression étant consigné.

12. Procédé selon l'une des revendications 10 et 11, les valeurs de pression mesurées étant évaluées avec prise en compte des valeurs mesurées du courant.

13. Ensemble formant vanne de soufflage d'un dispositif de soufflage destiné à produire un corps creux, l'ensemble formant soupape de soufflage comportant au moins une unité de vannes de traitement destinée à amener un fluide de traitement dans une préforme du corps creux sous pression de traitement et l'unité de vannes de traitement comportant au moins une électrovanne, **caractérisée en ce qu'**un moyen de détection d'une valeur de courant électrique de l'électrovanne est présent pendant un processus de soufflage.

14. Ensemble formant vanne de soufflage selon la revendication 13, l'ensemble formant vanne de soufflage comportant au moins un capteur de pression destiné à mesurer la pression au niveau de l'intérieur de la préforme.

15. Progiciel destiné à commander un ensemble formant vanne de soufflage selon l'une des revendications 13 et 14.

16. Progiciel destiné à la mise en œuvre du procédé selon l'une des revendications 1 à 12.
